(19) Europäisches Patentamt

European Patent Office

Office européen des brevets

(11) **EP 1 361 718 B1**

(12) **EUROPEAN PATENT SPECIFICATION**

(45) Date of publication and mention
of the grant of the patent:
**01.06.2005 Bulletin 2005/22**

(51) Int Cl.⁷: **H04L 25/49**

(21) Application number: **03076282.7**

(22) Date of filing: **10.04.2003**

(54) **Pulse transmission modulation and demodulation method**

Pulsübertragungsmodulations- und -demodulationsverfahren

Procédé de modulation et démodulation pour transmission à impulsions

(84) Designated Contracting States:
**DE NL**

(30) Priority: **09.05.2002 JP 2002134396**

(43) Date of publication of application:
**12.11.2003 Bulletin 2003/46**

(73) Proprietor: **KEL CORPORATION**
**Tama-shi, Tokyo (JP)**

(72) Inventor: **Higashida, Hiroshi**
**Yokohama-shi, Kanagawa 226-0027 (JP)**

(74) Representative:
**Van den Heuvel, Henricus Theodorus**
**Patentwerk BV**
**P.O. Box 1514**
**5200 BN 's-Hertogenbosch (NL)**

(56) References cited:
**US-A- 3 902 129**       **US-A- 4 423 506**
**US-A- 4 503 472**

## Description

FIELD OF THE INVENTION

The present invention generally relates to a digital signal modulation and demodulation method used for transmission of digital signals.

BACKGROUND OF THE INVENTION

In a case of transmitting a digital signal expressed in two values of 0 and 1 (or L and H), a method for transmitting such a digital signal as a pulse signal is known. In this case, a proper data transmission is not possible unless the transmission is synchronized between the transmitting side and the receiving side. Therefore, in low speed signal transmission, a pulse signal that is modulated with a clock having a rate ten times to a hundred times of the signal transfer rate is transmitted, and demodulation is executed to extract the original digital signal in asynchronization. On the other hand, in high speed signal transmission, modulation is executed in combination of a clock signal and data.

In this case, an original signal is modulated with a clock signal into a pulse-like modulated signal on the transmitting side, and this modulated signal being transmitted is received on the receiving side in a so-called self-synchronization method. In this method, the receiving side calculates the original clock information from the modulated signal and generates a clock signal in synchronization with the original clock for demodulation of the modulated signal to extract the original digital signal. As such methods of modulation performed in combination of a clock signal and data, for example, frequency modulation and phase modulation are known (refer, for example, to Japanese Laid-Open Patent Publication No. 2001-168723).

However, in the above mentioned case of modulation performed in combination of a clock signal and data, although the modulation executed on the transmitting side is relatively simple, the demodulation executed on the receiving side is complicated because it requires a filter or a PLL circuit for the demodulation to decipher the clock information from the modulated signal being received. This complication presents problems of delayed response and of complicated circuit arrangement, which can limit the application to a certain field or use.

In a case where signals must be sent at a high speed, for example, by a long-distance signal transmission or an insulated data transmission, or in a data transmission over an optical fiber, signals must be amplified to compensate the attenuation and to adjust the amplitude of the signals. If the signals are transmitted in pulses, they include direct current (DC) components, which condition makes it difficult to amplify signal changes at a large scale. Therefore, in this case, it is necessary to adopt a receiving circuit with a large amplification receiver which is connected to an alternating current (AC).

US-A-4 423 506 discloses a digital signal modulation and demodulation method for transmitting a digital signal, whose data logic is expressed by an H level and an L level, said digital signal being converted to a modulated signal for transmission and demodulated upon reception; wherein said modulated signal comprises pulse signals having duty ratios of H : L = N : 1 and 1 : N or H : L = 1 : N and N : 1 (with N > 1) in correspondence to said H level and said L level of said digital signal.

This document concerns the configuration of the signal and the interface between the transmission network and the modulators and demodulators, but it does not disclose how the demodulation process is carried out.

Therefore there is still a need for a demodulation method which is can be executed by simple means.

This aim is reached by such a method wherein said modulated signal is demodulated by a D flip-flop to extract said digital signal and that said modulated signal is put into a D-input terminal of said D flip-flop while said modulated signal delayed by a predetermined delay time Ty is put into a clock-input terminal thereof to produce a demodulated data signal from a Q-output terminal thereof.

According to this arrangement, the modulation on the transmitting side can be executed by a circuit simply constructed with a clock element. Also, the demodulation on the receiving side can be executed by a simple circuit which receives the modulated signal, delays it by a predetermined delay time and uses this delayed signal as a clock signal for the demodulation. Therefore, transmitter-receiver devices that use the digital signal modulation and demodulation method according to the present invention can be manufactured inexpensively in a miniaturized fashion.

It is noted that from US-A-3 902 129 a demodulation circuit is disclosed making use of a flip-flop. The transmission signals which are to be demodulated in the demodulation circuit are however of the PRM (pulse rate modulation)-type, being of another type of modulation, wherein the frequency of the pulses is varied in the modulation rather than the duty cycle as in the present invention.

A similar argument counts for US-A-4 502 472. The information content in the type of modulation described in this document is also related to the frequency

It is preferable that the modulated signals comprise pulse signals having a duty ratio (H : L) of 1 : 3 and 3 : 1 or 3 : 1 and 1 : 3 in correspondence to the H level and the L level of the digital signal. In other words, preferably, digital signals at the H level are modulated to repetitive pulse signals having a duty ratio of H : L = 1 : 3 while digital signals at the L level are modulated to repetitive pulse signals having a duty ratio of H : L = 3 : 1. Or, preferably, digital signals at the H level are modulated to repetitive pulse signals having a duty ratio of H : L = 3 : 1 while those at the L level are modulated to repetitive pulse signals having a duty ratio of H : L = I : 3.

According to this arrangement, the construction of circuits used for modulation and demodulation can be even simpler.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

**BRIEF DESCRIPTION OF THE DRAWINGS**

The present invention will become more fully understood from the detailed description given herein below and the accompanying drawings which are given by way of illustration only and thus are not limitative of the present invention.

FIG. 1 describes a relation between a clock signal and a modulated signal when a data signal is at an H level.

FIG. 2 describes a relation between the clock signal and the modulated signal when the data signal is at an L level.

FIG. 3 shows the direct current level of the modulated signal when the H level of the data signal prevails.

FIG. 4 shows the direct current level of the modulated signal when the L level of the data signal prevails.

FIG. 5 describes a relation between the modulated signal and a demodulated signal when the data signal is at the H level.

FIG. 6 describes a relation between the modulated signal and the demodulated signal when the data signal is at the L level.

FIG. 7 is a circuit diagram of a modulation circuit as an embodiment according to the present invention.

FIG. 8 is a circuit diagram of a demodulation circuit as an embodiment according to the present invention.

FIG. 9 is a modulation-timing diagram as an embodiment according to the present invention.

FIG. 10 is a demodulation-timing diagram as an embodiment according to the present invention.

DESCRIPTION OF THE PREFERRED EMBODIMENTS

Now, a preferred embodiment according to the present invention is described in reference to the drawings. In a digital signal modulation and demodulation method according to the present invention, digital signals (hereinafter referred to as "data signals") are modulated with a clock signal to modulated signals, which are pulse signals having duty ratios (H : L) of 1 : N and N : 1 (with N > 1). In this case, N is preferably minimized to improve the efficiency of modulation and the transmission efficiency of the modulated signals. Also, it is preferable that N be an integer because modulated signals are generated in relation to the clock signal in a circuit arrangement. Here, if N is 2, then pulse signals having duty ratios (H : L) of 2 : 1 and 1 : 2 are expressed in three ways. Therefore, modulation must be executed in states that are expressed by use of three clock periods of the clock signal, i.e., six states. On the other hand, if N equals 3, then pulse signals having duty ratios (H : L) of 3 : 1 and 1 : 3 are expressed in four ways. In this case, modulation can be executed in states that are expressed by use of two clock periods of the clock signal, i.e., four states, and the clock signal is used efficiently for the modulation. Therefore, in the following description, modulated signals are arranged as pulse signals having duty ratios (H : L) of 3 : 1 and 1 : 3. Here, the modulated signals that correspond to the logic H level of the data signals are expressed as pulse signals with a duty ratio (H : L) of 3 : 1 while those corresponding to the logic L level of the data signals are expressed as pulse signals with a duty ratio (H : L) of 1 : 3. However, instead, these modulated signals may be expressed as pulse signals with duty ratios of 1 : 3 and 3 : 1, respectively, to achieve the same effect.

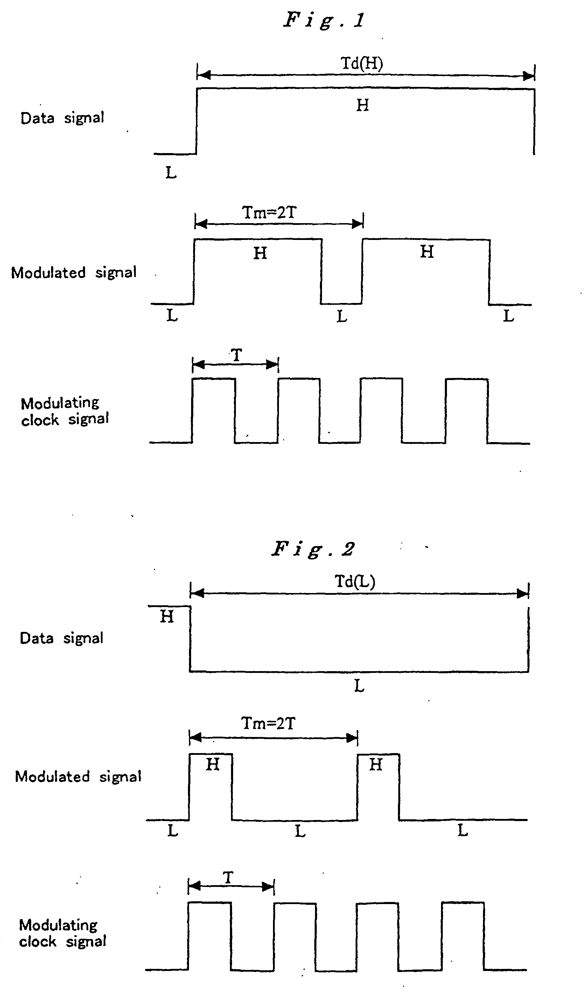

Referring now to FIG. 1 and FIG. 2, relations among the signals used in the digital signal modulation and demodulation method according to the present invention are described. Generally, a digital circuit performs signal processing in steps, using a clock signal, and the logic values (0 and 1) of the data signals are represented as the H level signals or the L level signals in synchronization to the clock signal. As shown in FIGS. 1 and 2, the frequency of the modulating clock signal is even times (twice or more) that of the data signals. With this modulating clock signal, the data signals are modulated into the modulated signals as pulse signals having duty ratios (H : L) of 3 : 1 and 1 : 3. As mentioned above, two periods of the modulating clock signal are used to generate one period of the modulated signals. Therefore, the period Tm of the modulated signal can be described as the following equation (1).

$$Tm = 2T \qquad (1)$$

For example, part of the data signal at the H level for time period Td(H) is modulated by the modulating clock signal with period T and output as a multiple of modulated signals each having a duty ratio (H : L) of 3 : 1 and a period of Tm (= 2T) as shown in FIG. 1. In the same manner, part of the data signal at the L level for time period Td(L) is modulated by the modulating clock signal with period T and output as a multiple of modulated signals each having a duty ratio (H : L) of 1 : 3 and a period of Tm as shown in FIG. 2. Here, instead, the duty ratios of the modulated signals that correspond to the respective H and L levels of the data signal in modulation may be exactly opposite of that described above as mentioned previously.

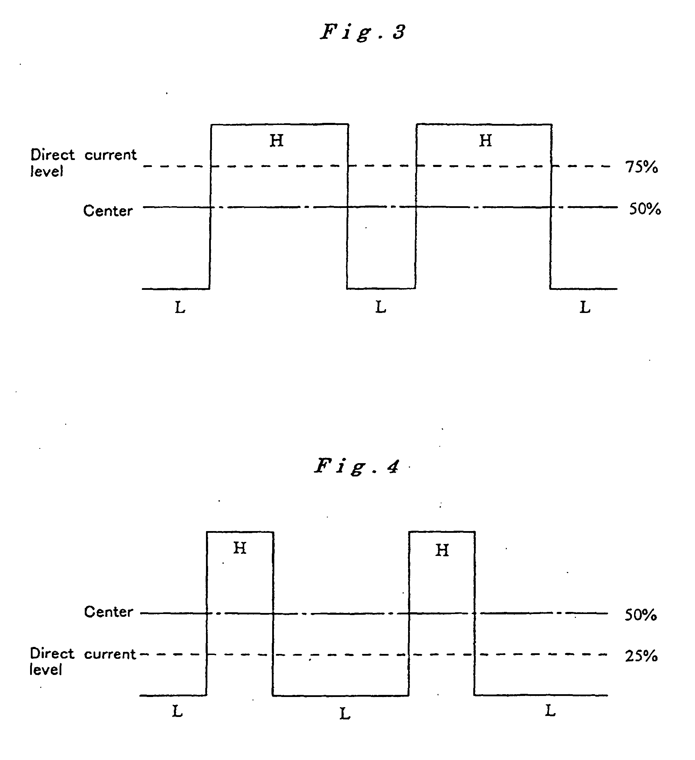

For amplification of these modulated signals, which are pulse signals as described above, the preferred embodiment uses an alternating current amplifier to amplify the alternating current components of the modulated signals, the alternating current components being those components alternating around the direct current components (direct current levels) included in the modulated signals. The modulated signals comprise pulse waves that oscillate up and down around the part at 50% of the amplitude of the modulated signals (this part is referred to as the "ideal direct current level"). When the H level of the data signals prevails, the direct current component (direct current level) of the modulated signals is 75% of the amplitude as shown in FIG. 3. On the other hand, when the L level of the data signals prevails, the direct current component (direct current level) is 25% of the amplitude as shown in FIG. 4.

As a result, the alternating current components of the modulated signals, i.e., the upward or downward amplitude of the direct current components, to be amplified by the alternating current amplifier will have 50% of the amplitude of or half the amplitude of the modulated signals that oscillate around the ideal direct current level. Therefore, it is necessary that the alternating current amplifier have twice the amplification that may be used for the amplification of the modulated signal oscillating around the ideal direct current level. This requirement is for the case where the duty ratio of the modulated signals is 3 : 1 or 1 : 3 (N = 3). If N is 4 or greater, then the amplification required will become correspondingly larger. Because of this reason, N = 3 is an optimal choice as it minimizes the required amplification. Furthermore, in the amplification of such pulse signals, distinguishing of the two values, i.e., the H and L levels, is required, but the quality or clarity of waveform is not important. Therefore, a saturation amplifier can be used for the amplification of the modulated signals.

Now, demodulation to original signals of the modulated signals, which have been modulated and output as described above, is described. In this example, demodulation is executed for modulated signals that have been modulated as pulse signals each having a duty ratio (H : L) of 3 : 1 in which the data signal at the H level repeats with a period of Tm and also for modulated signals that have been modulated as pulse signals each having a duty ratio (H : L) of 1 : 3 in which the data signal at the L level repeats with a period of Tm.

In the demodulation of the modulated signals, which have been modulated as pulse signals with duty ratios (H : L) of 3 : 1 and of 1 : 3, at first, a determination is made whether the signal level at predetermined time after the rise of the level from the L level to the H level (i.e., at delay time Ty) is at the H level or the L level. If it is at the H level, then this signal with period Tm is converted to a signal that has the H level. On the other hand, if the signal level at the predetermined delay time Ty is at the L level, then this signal with period Tm at the moment is converted into a signal that has the L level.

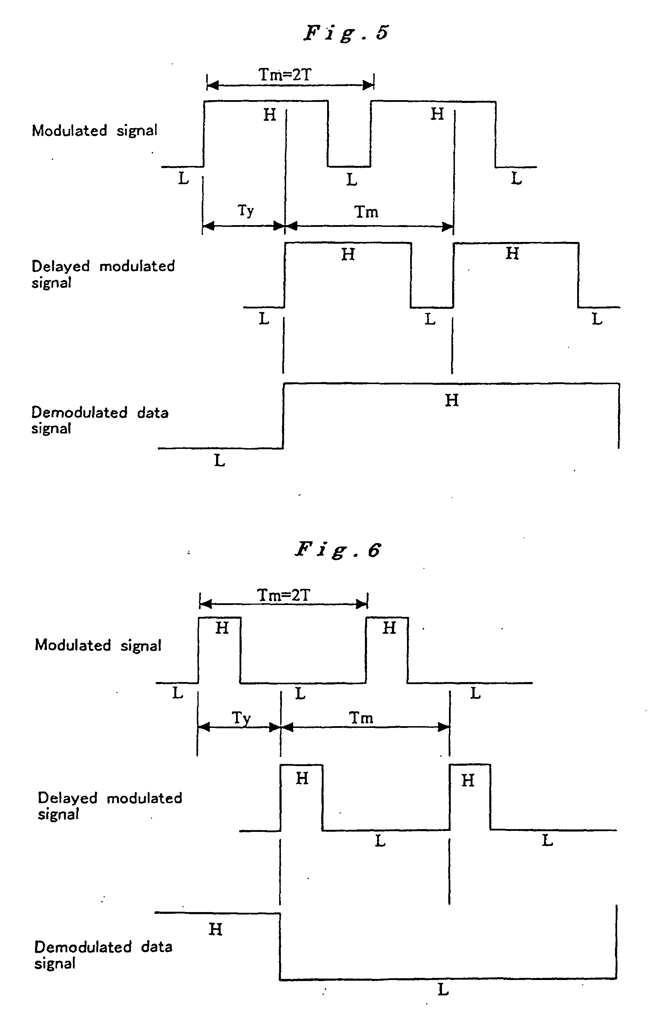

For example, in the case of the modulated signals with a duty ratio (H : L) of 3 : 1, which corresponds to the data signal at the H level, the signal at the predetermined delay time Ty after the signal change from the L level to the H level is at the H level as shown in FIG. 5. Therefore, this signal with period Tm is converted to a signal with the H level. As long as the modulated signals with a duty ratio (H : L) of 3 : 1 persist, the H level continues in the data signal being demodulated as shown in the drawing.

Although there is a delay by the predetermined delay time Ty, the H level of the data signal having existed prior to the modulation is reproduced accurately in the demodulation. Similarly, in the case of the modulated signals with a duty ratio (H : L) of 1 : 3, which corresponds to the data signal at the L level, the signal at the predetermined delay time Ty after the signal change from the L level to the H level is at the L level as shown in FIG. 6. Therefore, this signal with period Tm is converted to a signal with the L level. As long as the modulated signals with a duty ratio (H : L) of 1 : 3 persist, the L level continues in the data signal being demodulated as shown in the drawing. Although there is a delay by the predetermined delay time Ty, the L level of the data signal having existed prior to the modulation is reproduced accurately in the demodulation.

For the extraction of the data signals by demodulating the modulated signals as described above, for example, a D flip-flop is used. In this case, the modulated signals are put into the D-input terminal of the D flip-flop while also the modulated signals delayed by the predetermined delay time Ty are put into the clock-input terminal thereof, to generate the demodulated data signals from the Q-output terminal of the D flip-flop. In other words, the D flip-flop is a flip-flop that picks up the condition of the signal being fed into the D-input when the signal level fed into the clock-input rises and that expresses the condition as output from the Q-output terminal thereof. As shown in the FIGS. 5 and 6, therefore, the modulated signals delayed by the predetermined time and fed into the clock-input of the D flip-flop enable the D flip-flop to reproduce the original signals (data signals) in the demodulation.

By the way, the delay time Ty for the modulated signals to be fed into the clock-input terminal must satisfy the following condition: Ty < (3/4)Tm. As it is apparent from FIG. 5, if the delay time Ty is too long with respect to the period of the modulated signals having a duty ratio (H : L) of 3 : 1 and allows the signal level at the delay time

Ty to fall into the L level, then the demodulation does not reproduce the correct data signals. Furthermore, the delay time Ty must also satisfy the following condition: Ty > (1/4)Tm. As it is apparent from FIG. 6, if the delay time Ty is too short with respect to the period of the modulated signals having a duty ratio (H : L) of 1 : 3 and allows the signal level at the delay time Ty to remain at the H level, then the demodulation does not reproduce the correct data signals, either. Therefore, the following conditional expression (2) must be satisfied.

$$(1/4)Tm < Ty < (3/4)Tm \qquad (2)$$

Furthermore, in consideration of the modulation of signals with H and L levels into signals which comprise pulse signals having duty ratios of 1 : N and N : 1, the delay time Ty must satisfy the following conditional expression (3).

$$\{1/(N+1)\}Tm < Ty < \{N/(N+1)\}Tm \qquad (3)$$

In this way, the digital signal modulation and demodulation method according to the present invention can simplify the construction of the modulation and demodulation device because, for the demodulation of the modulated signals, it does not require the extraction from the modulated signals of the modulating clock information that has been used for the modulation of the data signals.

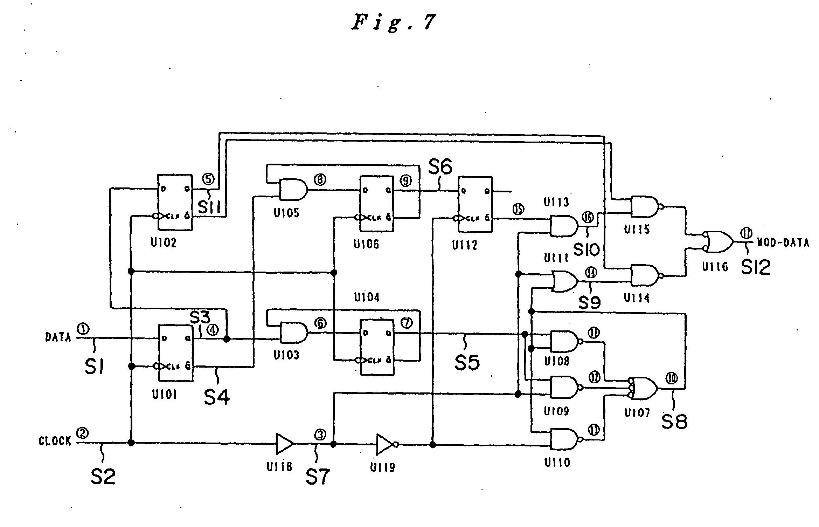

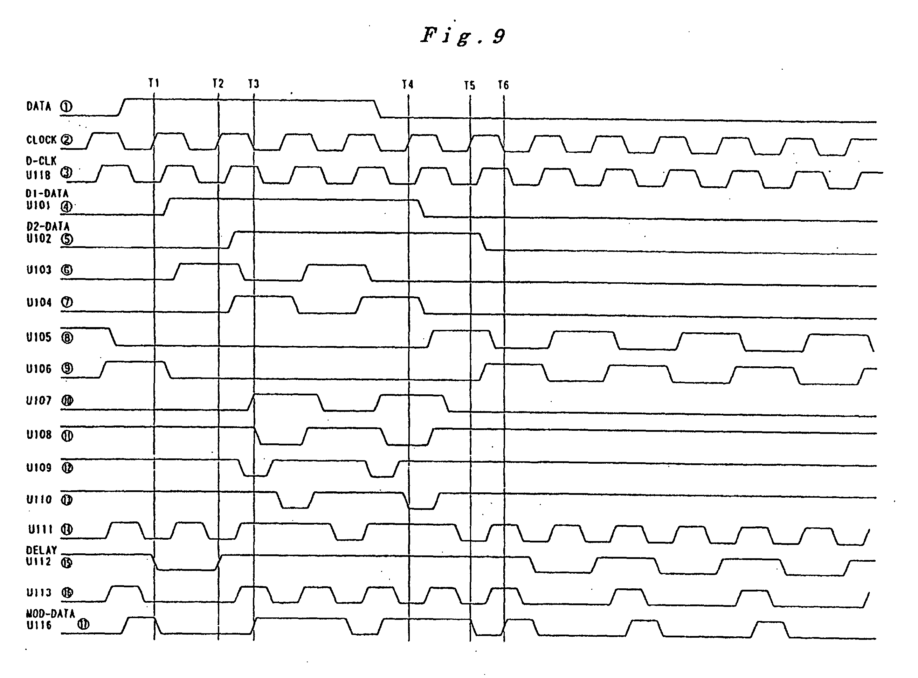

Now, a modulation circuit and a demodulation circuit that realize the above described digital signal modulation and demodulation method are described. At first, the modulation circuit is described in reference to FIGS. 7 and 9. The modulation timing diagram in FIG. 9 shows waveforms, which are labeled, respectively, with circled numbers that correspond to the identical numbers of points in FIG. 7 where these waveforms are observed.

In FIG. 7, flip-flop U101 functions to set the delay time of a data signal S1 to a modulating clock signal S2 and outputs a signal S3 which is synchronized with the modulating clock signal S2 and an inverse logic signal S4. Gate element U103 and flip-flop U104 constitute a toggle counter, in which each element alternately uses the clock pulses of the modulating clock signal S2 while signal S3 is at the H level. As a result, the toggle counter outputs a signal S5 which alternates between the H level and the L level, the time of the signal staying at each level corresponding to the period of the modulating clock signal S2. Also, another gate element U105 and another flip-flop U106 constitute another toggle counter, in which each element also alternately uses the clock pulses of the modulating clock signal S2 while signal S3 is at the L level, i.e., while the inverse logic signal S4 of signal S3 is at the H level. As a result, this toggle counter outputs a signal S6 which alternates between the H level and the L level, the time of the signal staying at each level corresponding to the period of the modulating clock signal S2.

In the following description, the case for the logic H level of the data signal S 1 and that for the logic L level are described separately. When the data signal S1 at the H level is input into flip-flop U101, whose intake timing is controlled by the modulating clock signal S2, a signal S3 is output in synchronization with the modulating clock signal S2. As shown in the modulation timing diagram of FIG. 9, the H level of the data signal S I is taken at time T1 and is output in synchronization with the modulating clock signal S2.

As mentioned above, flip-flop U104 is being toggled in synchronization with the modulating clock signal S2 while the output S3 of flip-flop U101 is at the H level. As a result, the signal S5 being output alternates between the H level and the L level, each level lasting for the corresponding period of the modulating clock signal S2. In this case, because the modulating clock signal S2 has a frequency even-times that of the data signal S1, the flip-flop resumes the original toggle condition when the toggling stops. Gate element U118 is used for alleviating the effect of delay time, etc. of components which constitute the circuit. It outputs a modulating clock signal S7 which is adjusted from the modulating clock signal S2. If the delay time of components constituting the circuit is substantially short with respect to the period of the modulating clock signal S2, then this gate element may be omitted, and the circuit will be still functionable at an equivalent performance.

Gate elements U108, U109, U110 and U107 constitute a set-reset flip-flop, which receives the signal S5 output from flip-flop U104 and the modulating clock signal S7 adjusted by gate element U118. The set-reset flip-flop comprises the same number of gate elements as the number of steps to make the signal delay time evenly distributed. However, if the delay time of the set-reset flip-flop is substantially short with respect to the period of the adjusted modulating clock signal S7, then gate element U110 may be omitted, and the set-reset flip-flop may be still functionable at an equivalent performance. The set-reset flip-flop outputs a signal S8 which keeps the H level for a period from a rise of the adjusted modulating clock signal S7 to the next rise thereof and feeds this signal S8 to gate element U111. As a result, this gate element U111 outputs a signal S9 which has a modulated pulse extending at the H level over a period that corresponds to the H level, L level and H level of the clock signal S7. In other words, signal S9 is the modulated signal (a pulse signal with a duty ratio (H : L) of 3 : 1) for the data signal S 1 at the H level.

On the other hand, when the data signal S1 at the L level is input into flip-flop U101, whose intake timing is controlled by the modulating clock signal S2, a signal S3 at the L level is output in synchronization with the modulating clock signal S2. Therefore, gate element U105 receives a signal S4 at the H level, which is the inverse logic of signal S3 at the L level. As shown in the modulation timing diagram of FIG. 9, the L level of the data signal S 1 is taken at time T4 and is output in synchronization with the modulating clock signal S2.

Flip-flop U106 is being toggled in synchronization with the modulating clock signal S2 while the output S3 of flip-flop U101 is at the L level, i.e., while the inverse logic S4 of signal S3 is at the H level. As a result, the signal S6 being output from the flip-flop alternates between the H level and the L level, each level lasting for the corresponding period of the modulating clock signal S2. In this case, also because the modulating clock signal S2 has a frequency even-times that of the data signal S1, the flip-flop resumes the original toggle condition when the toggling stops.

Gate element U119 and flip-flop U112 are used for synchronization to the fall of the adjusted modulating clock signal S7 to switch the H level of the modulating clock signal S7 without the effect of delay time, etc. of components which constitute the circuit. However, if the delay time of components constituting the circuit is substantially short with respect to the period of the adjusted modulating clock signal S7, then these elements may be omitted, and the circuit may be still functionable at an equivalent performance.

Gate element U113 outputs a signal S10 which is at the H level for the first H level of the adjusted modulating clock signal S7 being output from gate element U118 but which is at the L level for the next H level of the adjusted modulating clock signal, repetitively, as shown in the drawing. In other words, this signal S10 is the modulated signal (a pulse signal with a duty ratio (H : L) of 1 : 3) for the data signal S1 at the L level.

Flip-flop U102 generates a control signal S11 that switches signals S9 and S10 being output from gate elements U111 and U113, respectively, for delivery of the modulated signal S12. The control signal S11 and the inverse logic being output from the flip-flop U102 are used to suppress the modulated signal S10 being output from gate element U113 by gate element U115 while the data signal S1 is at the H level and to suppress the modulated signal S9 being output from gate element U111 by gate element U114 while the data signal S1 is at the L level. In this way, in correspondence to the logic value of the data signal S1, either signal S9 or signal S10 is passed through to gate element U116, which outputs the final version of the modulated signal S12.

The above sections have described the circuit arrangement and operation of the modulation circuit. As for the delay time of the modulation circuit, refer to the modulation timing diagram in FIG. 9. The period between T1 and T3 is the delay time of the modulation circuit while the data signal S1 is at the H level, and the period between T4 and T6 is the delay time of the modulation circuit while the data signal S1 is at the L level. As it is apparent from FIG. 9, the period between T1 and T3 and that between T4 and T6 are equivalent, and they will not change every time. Therefore, the data signal S1 is modulated to the modulated signal S12 in synchronization with the modulating clock signal S2 in real time.

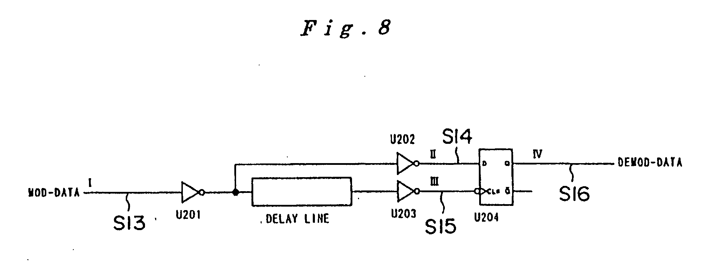

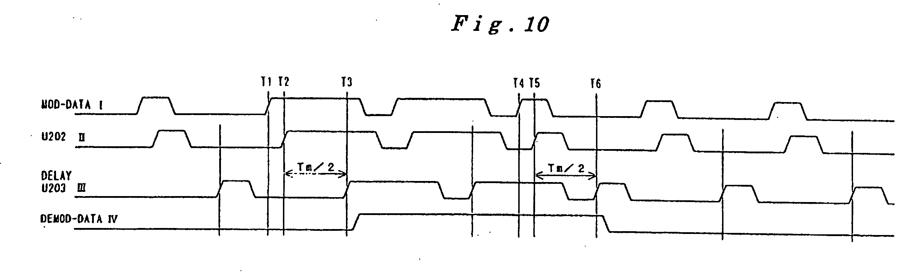

Now, in reference to FIGS. 8 and 10, the demodulation circuit is described. The demodulation timing diagram shown in FIG. 10 shows waveforms, which are labeled, respectively, with Roman numbers that correspond to the identical numbers of points indicated in the circuit diagram of FIG. 8 where these waveforms are observed.

In FIG. 8, a gate element U201 functions to drive the Delay Line. If the modulated signal S13 has a sufficient driving capacity, then this element may be omitted, and the circuit may be still functionable at an equivalent performance although it may be necessary to adjust the logic level. Gate elements U202 and U203 function to reform the waveform of the signal. If the waveform has a sufficient clarity as digital waveform, then these elements may be also omitted, and the circuit may be still functionable at an equivalent performance although it may be necessary to adjust the logic level. The Delay Line comprises passive elements and functions to delay the output, i.e., the passage of the signal being input, by the predetermined delay time Ty. Here, the output is delayed by half the period of the data signal (Ty = Tm/2) to satisfy the above conditional expression (2). In this way, the Delay Line, which comprises passive elements, does not require a lock time as a PLL does, so the Delay Line can respond in real time in synchronization with the input signal.

The output S14 of gate element U202 is input into the D-input terminal of flip-flop U204 while the output S15 (i.e., the modulated signal S13 delayed by the delay time Ty) of gate element U203 is input into the clock-input terminal of thereof. As a result, the flip-flop outputs a data signal S16, which is a demodulation version of the original data signal as described above in reference to FIGS. 5 and 6.

As it is clear from the above description, the digital signal modulation and demodulation method of the present invention provides a simple circuit arrangement for modulation and demodulation of digital signals. Especially, as the modulation circuit comprises only flip-flop circuits and gate elements, it can be manufactured easily as an IC, and the circuit elements can be realized inexpensively in simple arrangements. Also, the demodulation circuit can be realized inexpensively in a simple arrangement because the circuit is designed to delay the modulated signal by a predetermined time (one period of a clock signal in the above embodiment) and to use the delayed signal as a clock signal for the demodulation. As a result, modulation and demodulation devices can be miniaturized.

**Claims**

1. A digital signal modulation and demodulation method for transmitting a digital signal (S1), whose data logic is expressed by an H level and an L level, said digital signal (S1) being converted to a modulated signal (S12, S13) for transmission and demodulated upon reception; wherein said modulated signal (S12, S13) comprises pulse signals having duty ratios of H : L = N : 1 and 1 : N or H : L = 1 : N and N : 1 (with N > 1) in correspondence to said H level and said L level of said digital signal (S1), **characterized in that** said modulated signal (S13) is demodulated by a D flip-flop(U204) to extract said digital signal (S16) and that said modulated signal (S13) is put into a D-input terminal of said D flip-flop (U204) while said modulated signal delayed by a predetermined delay time Ty is put into a clock-input terminal thereof to produce a demodulated data signal from a Q-output terminal thereof.

2. The digital signal modulation and demodulation method as set forth in claim 1, wherein said predetermined delay time Ty is set to satisfy a conditional expression of: $\{1/(N+1)\}Tm < Ty < \{N/(N+1)\}Tm$, wherein Tm is the period of the modulated signal.

3. The digital signal modulation and demodulation method as set forth in claim I or 2, wherein said modulated signal (S 12, S13) comprises pulse signals having duty ratios of H : L = 3 : 1 and 1 : 3 or H : L = 1 : 3 and 3 : 1 in correspondence to said H level and said L level of said digital signal (S1).

4. The digital signal modulation and demodulation method as set forth in claim 3, wherein period Tm of said modulated signal (S12, S13) is determined with two periods 2T of a modulating clock signal (S2) having a period T, with a relation of Tm = 2T.

5. The digital signal modulation and demodulation method as set forth in claim 4, wherein said predetermined delay time Ty is set to satisfy a conditional expression of: $(1/4)Tm < Ty < (3/4)Tm$.

**Patentansprüche**

1. Ein digitales Signalmodulations- und Demodulationsverfahren zur Übertragung eines digitalen Signals (S1), dessen Datenlogik mit einem H- und einem L-Pegel ausgedrückt wird, wobei besagtes digitales Signal (S1) zur Übertragung in ein moduliertes Signal (S12, S13) umgewandelt wird und bei Empfang demoduliert wird; wobei das besagte modulierte Signal (S12, S13) Impulssignale umfasst, mit Einschaltverhältnissen von H : L = N : 1 und 1 : N oder H : L = 1 : N und N : 1 (mit N > 1) in Übereinstimmung mit besagtem H-Pegel und besagtem L-Pegel von besagtem digitalen Signal (S1), **dadurch gekennzeichnet, dass** das besagte modulierte Signal (S13) mit Hilfe eines D-Flipflops (U204) demoduliert wird, um das besagte digitale Signal (S16) zu extrahieren, und dass das besagte modulierte Signal (S13) in einen D-Eingang des besagten D-Flipflops (U204) eingeleitet wird, während das besagte modulierte Signal, durch eine vorgegebene Verzögerungszeit Ty verzögert, in einen Takteingang hiervon eingeleitet wird zur Erzeugung eines demodulierten Datensignals an einem Q-Ausgang desselben.

2. Das digitale Signalmodulations- und Demodulationsverfahren nach Anspruch 1, wobei die besagte vorgegebene Verzögerungszeit Ty so gewählt wird, dass ein bedingter Ausdruck: $\{1/(N+1)\}Tm < Ty < \{N/(N+1)\}Tm$ erfüllt wird, wobei Tm die Dauer des modulierten Signals ist.

3. Das digitale Signalmodulations- und Demodulationsverfahren nach Anspruch 1 oder 2, wobei das besagte modulierte Signal (S12, S13) Impulssignale umfasst mit Einschaltverhältnissen von H : L = 3 : 1 und 1 : 3 oder H : L = 1 : 3 und 3 : 1 in Übereinstimmung mit besagtem H-Pegel und besagtem L-Pegel des besagten digitalen Signals (S1).

4. Das digitale Signalmodulations- und Demodulationsverfahren nach Anspruch 3, wobei die Dauer Tm des besagten modulierten Signals (S12, S13) bestimmt wird von zwei Zeitwerten 2T eines modulierten Taktsignals (S2) mit einer Dauer T, mit einem Verhältnis von Tm = 2T.

5. Das digitale Signalmodulations- und Demodulationsverfahren nach Anspruch 4, wobei die besagte vorgegebene Verzögerungszeit Ty so gewählt wird, dass ein bedingter Ausdruck: $(1/4)Tm < Ty < (3/4)Tm$ erfüllt wird.

**Revendications**

1. Procédé de modulation et de démodulation de signaux numériques pour transmettre un signal numérique (S1) dont la logique de données est exprimée par un niveau H et un niveau L, ledit signal numérique (S1) étant converti en un signal modulé (S12, S13) pour être transmis et étant démodulé à la réception ; en sachant que ledit signal modulé (S12, S 13) est constitué de signaux d'impulsion ayant des rapports cycliques de H : L = N : 1 et 1 : N ou H : L = 1 : N et N : 1 (avec N > 1) correspondant audit niveau H et audit niveau L dudit signal numérique (S1), **caractérisé en ce que** ledit signal modulé (S13) est démodulé par une bascule D (U204) pour extraire ledit signal numérique (S16) et **en ce que** ledit signal modulé (S13) est introduit dans une borne formant entrée D de ladite bascule D (U204) tandis que ledit signal modulé retardé d'un temps de retard prédéterminé Ty est introduit dans une borne formant entrée d'horloge de celle-ci pour produire un signal de données démodulé à partir d'une borne formant sortie Q de celle-ci.

**2.** Procédé de modulation et de démodulation de signaux numériques selon la revendication 1, dans lequel ledit temps de retard prédéterminé Ty est réglé pour satisfaire à une expression conditionnelle de : $\{1/(N+1)\}$Tm < Ty < $\{N/(N+1)\}$ Tm, où Tm est la période du signal modulé.

**3.** Procédé de modulation et de démodulation de signaux numériques selon la revendication 1 ou 2, dans lequel ledit signal modulé (S12, S13) est constitué de signaux d'impulsion ayant des rapports cycliques de H : L = 3 : 1 et 1 : 3 ou H : L = 1 : 3 et 3 : 1 correspondant audit niveau H et audit niveau L dudit signal numérique (S1).

**4.** Procédé de modulation et de démodulation de signaux numériques selon la revendication 3, dans lequel la période Tm dudit signal modulé (S12, S13) est déterminée par deux périodes 2T d'un signal d'horloge modulant (S2) ayant une période T, avec une relation de Tm = 2T.

**5.** Procédé de modulation et de démodulation de signaux numériques selon la revendication 4, dans lequel ledit temps de retard prédéterminé Ty est réglé pour satisfaire à une expression conditionnelle de : (1/4)Tm < Ty < (3/4)Tm.

## Fig. 1

Data signal — Td(H), H, L

Modulated signal — Tm=2T, H, H, L, L, L

Modulating clock signal — T

## Fig. 2

Data signal — Td(L), H, L

Modulated signal — Tm=2T, H, H, L, L, L

Modulating clock signal — T

*Fig.3*

*Fig.4*

*Fig. 5*

Modulated signal

Tm=2T

H        H

L      L      L

Ty     Tm

Delayed modulated signal

H        H

L     L     L

Demodulated data signal

H

L

*Fig. 6*

Modulated signal

Tm=2T

H        H

L     L     L

Ty     Tm

Delayed modulated signal

H        H

L     L

Demodulated data signal

H

L

Fig. 7

EP 1 361 718 B1

$Fig.8$

MOD-DATA ─I─ ⟩ U201 DELAY LINE ⟩ U203 ⟩ U202 II D Q IV ── DEMOD-DATA

S13 S15 S14 S16

U204

Fig. 9

# Fig. 10

| | T1 T2 | T3 | T4 T5 | T6 |
|---|---|---|---|---|

MOD-DATA I

U202 II

DELAY
U203 III

DEMOD-DATA IV

$Tm/2$

$Tm/2$